# EUROPEAN PATENT APPLICATION

(11) **EP 1 527 806 A1**
(43) Date of publication of application: **04.05.2005**
(21) Application number: 04425222.9
(22) Date of filing: 30.03.2004
(51) Int. Cl.: B01D 46/12

(54) **Modular filter for electrical appliances, in particular for filtering hoods**

(30) Priority: 28.10.2003 IT RN20030035
(71) Applicant: Pellegrini, Alfredo, 60044 Fabriano (Ancona) (IT)
(72) Inventor: Pellegrini, Alfredo, 60044 Fabriano (Ancona) (IT)
(74) Representative: Lanzoni, Luciano

(57) **Abstract**

A filter (1) for gaseous substances for apparatuses, in particular electrical appliances such as aspiration hoods for spaces, comprises a plurality of distinct modular elements (2) which bear coupling elements (3; 6, 7) that have mutually complementary shapes able to be coupled and uncoupled with each other to allow to form a unitary set of said elements (2) which is modular and defines a said filter (1).

## Description

The present invention relates to the construction of filters for electrical appliances, in particular for aspirating hoods in civil spaces, and it specifically concerns a modular filter.

Filters for electrical appliances - such as aspirating hoods, kitchens, ovens, etc. - are constructed, as is well known, with monolithic structure and with complementary geometric conformation and a corresponding seat obtained in the body of the receiving electrical appliance. The construction of said filter is thus strictly subordinated to the type, shape and dimensions of the electrical appliances for which they are intended. Their shape is also subordinated to a harmonic insertion in the design of the electrical appliance, as well as to the spatial positioning which in the global context of the electrical appliance is attributed to the filter itself.

If the filters are of the activated charcoal type, as is the case for example for known odour filters of aspirating hoods, the constructive shape of the filter is further conditioned also by the fluid dynamics of the air flow that traverses the hood. The constructive shape of the filter depends not only on its positioning along the path of the fluid current, but also on the local velocity of the gases.

It is well known, in fact, that the local velocity of the gases is such as to influence both the energy losses of the fluid current traversing the filter, and the quantity of charcoal itself, i.e. the surface extension, the grain size of the activated charcoal and the thickness of the charcoal layer to be provided in the filter in order to ensure that the gases have sufficient slowing times to reach the best degree of abatement of the pollutants transported.

The above description implies that currently, in the constructive context, it is necessary to provide very numerous filter models, strictly specific for the recipient apparatus, i.e. models built adhoc on a case by case basis and in practice almost totally separated from any aspect of constructive standardisation.

This causes a series of problems due mainly to the need to manage a considerable number of different filter types in production warehouses and in spare parts warehouses. The economic consequences are far from negligible. Overall operating costs have a considerable impact on a product whose own intrinsic value is, in itself, rather low. Moreover, the rapid obsolescence of many products that are electively destined to receive the filters further aggravates this disadvantageous situation. If one also considers that the builders of these products are also obliged to ensure the availability of spare parts for as many as ten years from the end of the production of a specific electrical appliance, it is readily apparent that the situation outlined above has a heavy impact on productive economics.

The object of the present invention is to overcome these problems by means of a filter so designed as to be able to have a modular structure, which therefore can be standardised rather easily and economically, but which at the same time has a high level of versatility, to allow the construction of filters of various shapes and dimensions, as well as of various types according to the apparatus specifically intended to receive them.

In accordance with the invention, said object is achieved by a filter for gaseous substances for apparatuses, in particular electrical appliances such as aspiration hoods for spaces, characterised in that it comprises a plurality of distinct modular elements, which bear coupling elements that have mutually complementary shapes able to be coupled and uncoupled with each other to allow to form a unitary set defining a said specific filter for a said apparatus.

The technical features of the invention, according to the aforesaid objects, can be clearly noted from the content of the appended claims and its advantages shall be made more readily apparent in the detailed description that follows, made with reference to the accompanying drawings, which represent an embodiment provided purely by way of non limiting indication, in which:
- Figures 1 and 2 respectively show a first and a second example of construction of a filter according to the invention, which is represented in a perspective global view;
- Figures 3 and 4 are perspective views of a modular element of the filter - having, by way of example, square shape - observed from two different viewpoints;
- Figures 5 and 6 are perspective views in enlarged scale of the filter of Figure 1 observed from two different viewpoints, respectively above and below;
- Figures 7 and 8 are perspective views of a modular element of the filter - having, by way of example, rectangular shape - observed from two different viewpoints;
- Figures 9 and 10 are perspective views in enlarged scale of the filter of Figure 2 observed from two different viewpoints, respectively located above and below said filter;

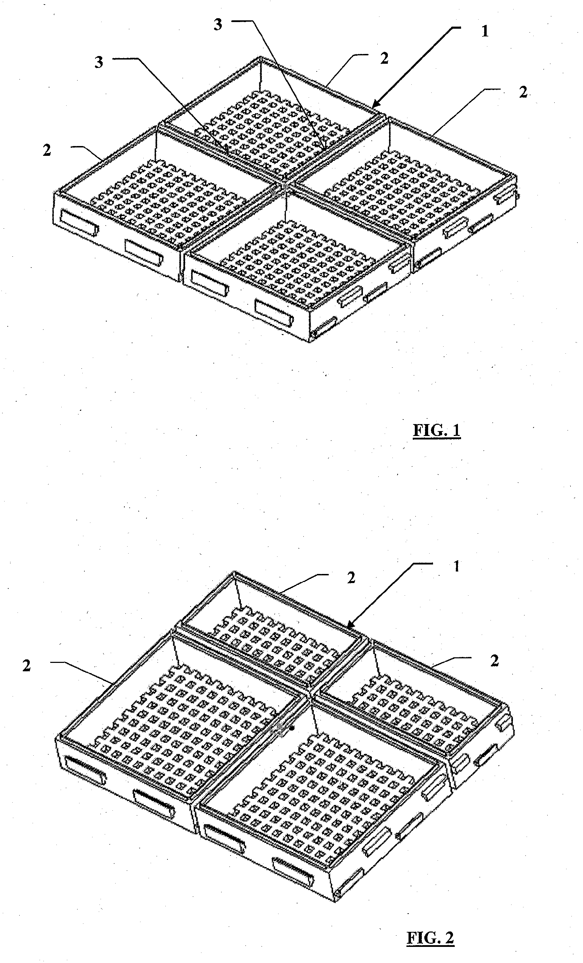

With reference to Figures 1 and 2 of the accompanying drawings, the number 1 globally designates a filter for electrical appliances, in particular for hoods for aspirating gases in civil residential spaces.

The filter essentially comprises a plurality of constructively distinct, but collectively assembled, modular elements 2, which bear elements 3, 6, and 7 for mutual coupling.

The coupling elements 3, 6 and 7 have geometrically complementary shapes able to be mutually coupled and uncoupled to allow forming a modular unitary set of said elements 2, globally defining a filter 1.

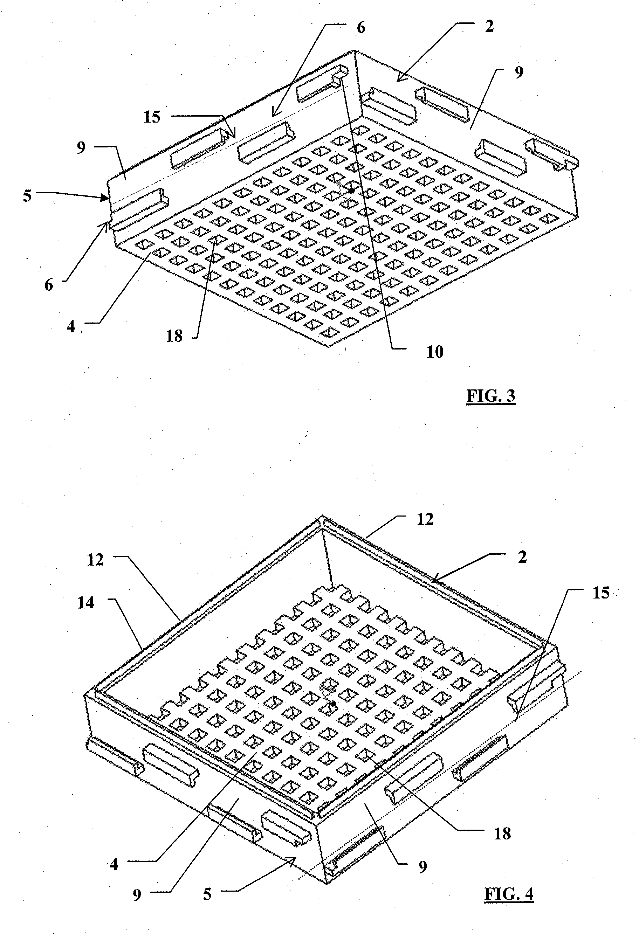

As figures 3, 4, 5 and 6 clearly show, the modular elements 2 have internally hollow prismatic shape delimited by side walls 9 and 12 which are monolithic with a first base wall 4 that is traversed by a plurality of holes 18 and which has quadrilateral contour 5.

The h ollow s hape of t he m odular e lements 2 allow t hem to contain a filtering element, schematically shown in the drawings and identified by the reference number 19.

In accordance with a first embodiment, the modular elements have the first base wall 4 with square contour 5.

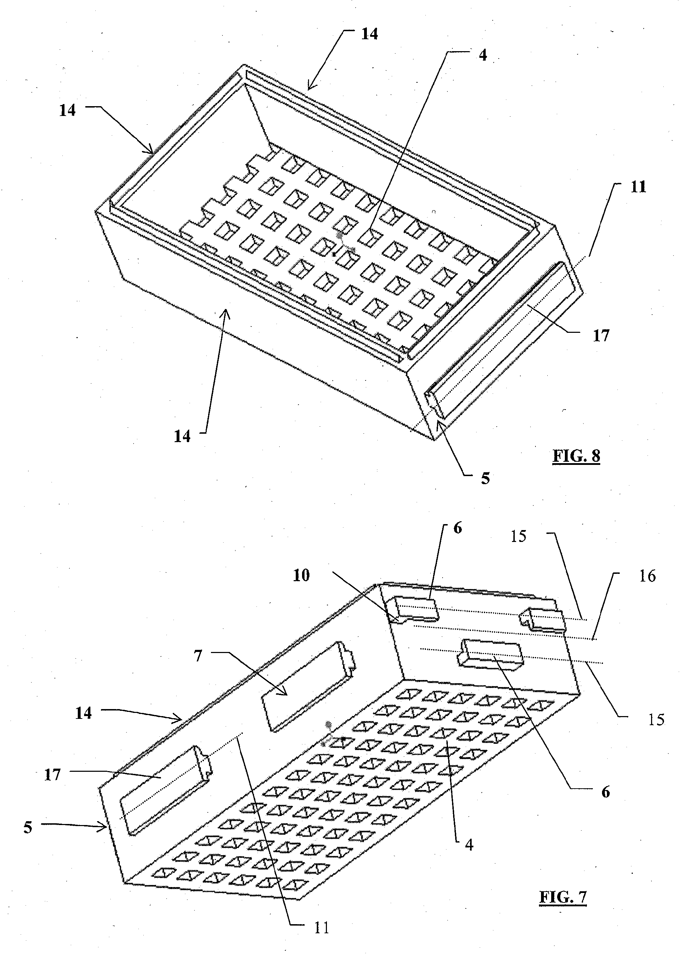

In a second embodiment of the modular elements - shown in Figures 7 and 8 - they instead have the first base wall 4 with rectangular contour 5.

Preferably, the first base wall 4 of this second embodiment of modular elements has a superficial extension that is substantially halved relative to the extension of the modular elements 2 whose first base wall 4 is square.

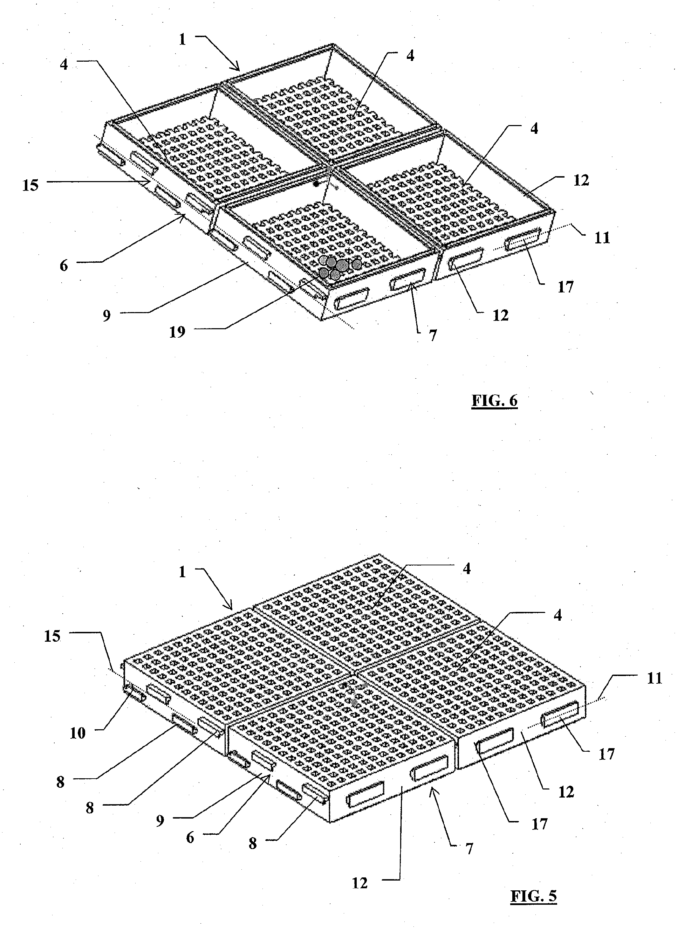

Through the mutual association of modular elements 2 all identical to each other and with square shape, a filter 1 can be obtained like the one shown by way of example in Figures 5 and 6.

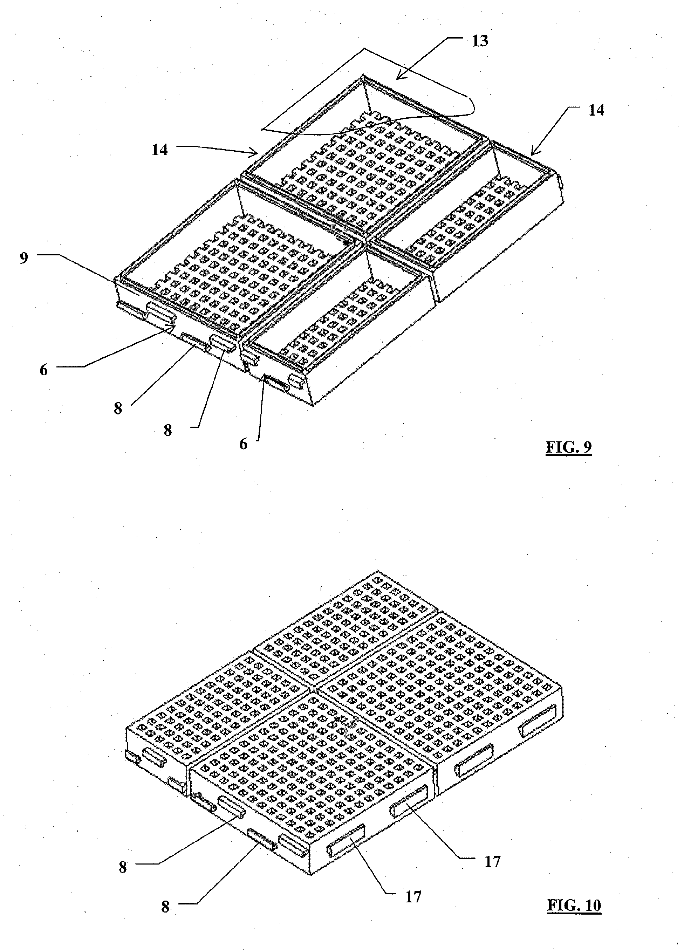

By appropriately combining together modular elements 2 of different shape and dimensions, for example assembly elements with square first base wall 4 and elements having rectangular first base wall 4, it is possible to obtain modules with larger dimensions, which can be further increased as needed and/or whole filters 1 like the one illustrated by way of example in Figures 9 and 10.

In regard to the filtering element 19, it is preferably made of an incoherent material in a loose state, such as a mixture of activated charcoal in the granular and/or powder state of suitable grain size that is housed in the prismatic cavities of the various modular elements 2.

The coupling elements 3, 6 and 7 include guides 6 and complementary shoes 7, with substantially prismatic shape, which have linear development and which develop longitudinally to the contour 5 of the modular element 2.

The linear guides have discontinuous development in segments 8. The segments 8 of the guides 6 are mutually offset along directions 15 that are parallel to the direction of relative sliding of guides 6 and shoes 7.

The linear guides 6 are borne by a first pair of adjacent lateral walls 9 of the contour of the modular element 2. They also include an abutment tooth 10 to limit the relative translation travel of the shoes 7 and of the guides 6 when two modular elements 2 are assembled by means of mutual coupling and sliding in a direction tangential to a side of its own contour during the assembly of the filter 1.

The shoes 7 also have: discontinuous shape in segments 17; they develop along a single development line 11, longitudinal to the contour 5 of each modular element 2; and they are borne by a second pair of mutually adjacent lateral walls 12 of the modular element 2.

The segmented conformation of the guides 6 and of the connecting shoes 7 has the advantage of allowing a reduced relative sliding resistance which facilitates the effortless mounting of the component elements 2 when a filter 1 is to be composed, without thereby compromising the overall rigidity of the filter 1, once all its modular component elements 2 are assembled.

It should also be noted that the achievement of an adequate global rigidity of the filter 1 is further favoured by the particular orientation and directional development constructively given to the guides 6 and to the shoes 7 which, with the only degree of translation freedom allowed in the peripheral direction to the contour of the modular element 2, in fact inhibit all remaining degrees of freedom of each modular element 2 with respect to the modular elements 2 contiguous thereto in the composition of the filter 1.

The modular elements may also comprise a second base wall 13, permeable to gaseous substances, which is able to delimit the hollow prismatic shape of the modular element 2 in combination with the first base wall 4.

The second base wall 13 can be associated both removably and irremovably to the modular element 2. It can also constructed in various manners.

For example, it can be constituted by a sort of grid - not shown in the drawings, but for example wholly similar to the first base wall 4 - which serving as a lid of the hollow prismatic shape of the modular elements 2 is able to hold the filtering element 19 contained in the cavity, letting itself in turn be traversed by the gaseous substances to be filtered.

In accordance with a preferable embodiment variant, it can be constructed in such a way as to be irremovably associated to the modular element 2, i.e. be constructed in such a way as to be made permanently connected to the modular element 2.

For this purpose, as the figures of the accompanying drawings clearly show, the modular elements 2 are provided with lateral walls 9 and 12 which are tapered in correspondence with their own end edges 14, which can be associated in abutting fashion with the second base wall 13 when it is positioned to close the modular element.

The mutual irremovable connection of the modular element 2 and of the second base wall 13 is performed in correspondence with said tapered edges 14.

Preferably, said form of irremovable connection is performed using as a second base wall 13 a membrane, able to be permeable to the gaseous substance, for example a fabric, a plastic film, or a layer of fibrous material.

Depending on the physical-chemical nature of the membrane and according to the compatibility of its constitutive material with the constitutive material of the modular elements 2, the irremovable connection can be obtained with different junction techniques such as gluing, heat sealing, ultrasonic welding and other similar and known techniques.

The modular elements 2 comprising the filter, once they are fully constituted and possibly equipped in their interior with an adequate quantity of filtering material can be provided in the finished state, disassembled from each other and contained in collective packages - mounting kits - in which they are loosely enclosed, ready to be mounted when needed.

Starting from this state, they can then be rapidly and simply assembled compatibly with the design of the seat whereto they are destined, which can be obtained, for example, on a peripheral wall of a casing of an electrical appliance.

The collective packages of disassembled elements greatly favour all the operations connected to production warehousing and to spare parts management in general, which are considerably facilitated in the management aspects and also, which is not the least advantage, in the aspects connected with the occupation of the storage spaces that in this specific case is extremely reduced.

On the other hand, the modularity of the filters 1 offers the additional advantage of allowing the final user to replace the used filters 1 easily and rapidly without using any tools and, if the filter is also located on an external wall of the electrical appliance which is also easily reachable, also in conditions of absolute safety.

It should be noted that the quadrilateral shape of the modular elements allow to obtain rather easily, by geometric composition, the filters 1 of the hoods for aspirating gaseous substances in civil spaces and of all the electrical appliances which generally have casings whose shapes and dimensions are substantially multiples of the dimensions of the base modular components 2. Therefore, it is clear that adopting component elements 2 of suitable dimension it is very easy to compose the filter 1 necessary on each occasion.

The modular construction of the filter 1 is also advantageous for a greater freedom in its positioning on the structure of the recipient electrical appliance. In the specific case of hoods, for example, an activated charcoal filter according to the invention can easily be positioned anywhere, thus even on a peripheral wall of the electrical appliance casing: this can allow to have a filter which can be traversed by gases transiting at slower velocity than the pertinent one with conventional charcoal filters. A slower traversing speed, in addition to the energy advantage of implying smaller head losses has the further advantage of requiring a smaller thickness of the filtering charcoal layer. For the same filter efficiency, a smaller thickness of the charcoal layer which can be provided whenever the transit velocities of the fluids are lower, allows further economies in the construction and operation of the filter.

The invention thus conceived is susceptible of evident industrial application; it can also be subject to numerous modifications and variants without thereby departing from the inventive concept. Moreover, all components can be replaced with technically equivalent elements.

## Claims

1. A filter for gaseous substances for apparatuses, in particular electrical appliances such as aspiration hoods for spaces, **characterised in that** it comprises a plurality of distinct modular elements (2) which bear coupling elements (3; 6, 7) that have mutually complementary shapes able to be coupled and uncoupled with each other to allow to form a unitary set of said elements (2) which is modular and defines a said filter (1).

2. A filter, as claimed in claim 1, **characterised in that** the modular (2) elements have a first base wall (4), permeable to gases, provided with quadrilateral contour (5).

3. A filter, as claimed in claim 2, **characterised in that** said modular elements (2) have said first base wall (4), with square contour (5).

4. A filter, as claimed in claim 2 or 3, **characterised in that** said modular elements (2) have a said first base wall (4), with rectangular contour (5).

5. A filter, as claimed in claim 4, **characterised in that** said elements with rectangular contour (5) have a said first base wall (4) whose superficial extension is substantially halved relative to the extension of said modular elements (2) having square first base wall (4).

6. A filter, as claimed in claim 1, **characterised in that** said modular elements (2) have internally hollow prismatic shape suitable to contain a filtering element (19).

7. A filter, as claimed in claim 6, **characterised in that** said filtering element (19) is an incoherent material in a loose state.

8. A filter, as claimed in claim 7, **characterised in that** said incoherent material is constituted by at least one activated charcoal.

9. A filter, as claimed in claim 1, **characterised in that** said coupling elements (3; 6, 7) include guides (6) and complementary shoes (7) develop longitudinally to the contour (5) of the modular element (2).

10. A filter, as claimed in claim 9, **characterised in that** said guides (6) and said shoes (7) have linear development.

11. A filter, as claimed in claim 10, **characterised in that** said linear guides (6) have discontinuous development in segments (8).

12. A filter, as claimed in claim 11, **characterised in that** the segments (8) of said guides (6) are mutually offset a long directions (15) parallel to the direction of relative sliding of said guides (6) and of said shoes (7).

13. A filter, as claimed in claim 10 or 11, **characterised in that** said linear guides (6) are borne by a first pair of adjacent lateral walls (9) of said modular element (2).

14. A filter, as claimed one of the claims 1, 11, 12, 13, **characterised in that** said guides (6) include an abutment tooth (10) to limit the relative translation travel of said shoes (7) and of said guides (6).

15. A filter, as claimed in claim 10, **characterised in that** said shoes (7) have discontinuous shape in segments (17).

16. A filter, as claimed in claim 15, **characterised in that** said shoes (7) develop along a single line of development (11) longitudinal to the contour (5) of a said modular element (2).

17. A filter, as claimed in claim 1, 9, 10, 15, 16, **characterised in that** said shoes (7) are borne by a second pair of adjacent lateral walls (12) of the modular element (2).

18. A filter, as claimed in claims 9 through 17, **characterised in that** said guides (6) and said shoes (7) complementarily prismatic shape.

19. A filter, as claimed in claim 1, **characterised in that** it comprises at least a second base wall (13), permeable to gaseous substances, which is able to delimit the hollow prismatic shape of the modular element (2) in combination with said first base wall (4).

20. A filter, as claimed in claim 19, **characterised in that** said first base wall (4) is monolithic with said modular element (2).

21. A filter, as claimed in claim 19, **characterised in that** said second base wall (13) can be removably associated to said modular element (2).

22. A filter, as claimed in claim 20, **characterised in that** said second base wall (13) can be irremovably associated to said modular element (2).

23. A filter, as claimed in claim 22, **characterised in that** said second base wall (13) and said modular element (2) can be mutually welded.

24. A filter, as claimed in claim 22 or 23, **characterised in that** said modular element (2) is provided with lateral walls (9; 12) that are tapered in correspondence with their end edges (14) able to be associated in abutment with said second base wall (13), the mutual irremovable connection of said modular element (2) and said second base wall (13) occurring in correspondence with said tapered edges (14).

25. A filter, as claimed in one of the claims 19, 21, 22, 23, 24, **characterised in that** said second base wall (13) includes a membrane that is permeable to gases.

26. A filter, as claimed in claim 25, **characterised in that** said membrane is a fabric, a plastic film, or a layer of fibrous material.

27. A filter, as claimed in one of the previous claims, **characterised in that** it has a plurality of said modular elements (2) provided in the disassembled state and globally enclosed in a collective package.

28. A filter, as claimed in one of the previous claims, **characterised in that** said it can be associated to a peripheral wall of a casing of an electrical appliance.

29. A filter, as claimed in claim 28, **characterised in that** said electrical appliance is a hood for aspirating ambient gases.
